# EUROPÄISCHE PATENTSCHRIFT

(11) **EP 2 344 363 B1**
(45) Veröffentlichungstag und Bekanntmachung des Hinweises auf die Patenterteilung: **14.12.2016**
(21) Anmeldenummer: 09748092.5
(22) Anmeldetag: 29.10.2009
(51) Int. Cl.: B60Q 1/14

(54) **VERFAHREN ZUM STEUERN EINER SCHEINWERFERANORDNUNG FÜR EIN FAHRZEUG UND SCHEINWERFERANORDNUNG HIERFÜR**
METHOD FOR CONTROLLING A HEADLIGHT ASSEMBLY FOR A VEHICLE AND HEADLIGHT ASSEMBLY THEREFOR
PROCÉDÉ DE COMMANDE D'UN SYSTÈME DE PHARES POUR UN VÉHICULE ET SYSTÈME DE PHARES CORRESPONDANT

(30) Priorität: 30.10.2008 DE 102008053945
(43) Veröffentlichungstag der Anmeldung: 20.07.2011
(73) Patentinhaber: Volkswagen Aktiengesellschaft, 38440 Wolfsburg (DE)
(72) Erfinder: KOPPERMANN, Rolf, 38444 Wolfsburg (DE)
(74) Vertreter: Reitstötter Kinzebach
(86) Internationale Anmeldenummer: PCT/EP2009/064287
(87) Internationale Veröffentlichungsnummer: WO 2010/049487

(56) Entgegenhaltungen:
- EP-A1- 2 060 441
- EP-A1- 2 062 775
- EP-A2- 2 135 774
- WO-A1-86/05147
- WO-A1-2009/021660
- WO-A2-2008/037388
- DE-A1-102007 038 084
- SE-C1- 181 374

## Beschreibung

Die vorliegende Erfindung betrifft ein Verfahren zum Steuern einer Scheinwerferanordnung für ein Fahrzeug mit einer rechten und einer linken Scheinwerfereinheit, bei dem für eine Abblendlichtfunktion die optischen Achsen der Scheinwerfereinheiten relativ zu einer parallelen Ausrichtung horizontal auseinandergeschwenkt werden. Des Weiteren betrifft die Erfindung eine Scheinwerferanordnung für ein Fahrzeug mit einer rechten und einer linken Scheinwerfereinheit und zumindest einem Steuergerät, wobei mit dem Steuergerät für eine Abblendfunktion die optischen Achsen der Scheinwerfereinheiten relativ zu einer parallelen Ausrichtung horizontal auseinanderschwenkbar sind.

Die Scheinwerferanordnung eines Fahrzeugs hat die Aufgabe, bei Dunkelheit den Verkehrsbereich vor dem Fahrzeug so gut wie möglich auszuleuchten. Hierfür steht üblicherweise eine Fernlichtfunktion zur Verfügung, die eine Lichtverteilung mit sehr großer Reichweite bereitstellt. Bei der Fernlichtfunktion ergibt sich jedoch das Problem, dass andere Verkehrsteilnehmer, insbesondere die Fahrer entgegenkommender oder vorausfahrender Fahrzeuge, von der Lichtemission des Fernlichts geblendet werden. Aus diesem Grund wird von der Scheinwerferanordnung üblicherweise ferner eine Abblendlichtfunktion bereitgestellt, deren Lichtverteilung zwar weiterhin eine möglichst umfassende Ausleuchtung des Verkehrsbereichs vor dem Fahrzeug bereitstellt, die jedoch gleichzeitig nicht zu einer Blendung anderer Verkehrsteilnehmer führt.

Der Fahrer des Fahrzeugs schaltet üblicherweise manuell zwischen der Abblendlichtfunktion und der Fernlichtfunktion hin und her. Dies erfordert jedoch eine hohe Konzentration des Fahrers und kann zu einer Ablenkung von anderen sicherheitsrelevanten Informationen führen. Es wurden daher Scheinwerferanordnungen entwickelt, mit denen Verkehrsteilnehmer in Richtung der Lichtemission der Scheinwerferanordnung erfasst werden können und die Gesamtlichtverteilung der Scheinwerferanordnung so an die Position eines erfassten Verkehrsteilnehmers angepasst wird, dass dieser nicht mehr geblendet wird. In der WO 2008/037388 A2 ist beispielsweise ein Verfahren zum Steuern einer Scheinwerferanordnung für ein Fahrzeug angegeben, bei dem die Emissionsrichtungen der Lichtstrahlen der Scheinwerfereinheiten für eine Abblendlichtfunktion horizontal auseinandergeschwenkt werden, um eine Blendung eines anderen erfassten Verkehrsteilnehmers zu verhindern.

Es ist die Aufgabe der vorliegenden Erfindung, ein Verfahren zum Steuern einer Scheinwerferanordnung und eine Scheinwerferanordnung für ein Fahrzeug bereitzustellen, mit denen dem Fahrer des Fahrzeugs eine möglichst gute Sicht auf die vor ihm liegende Fahrbahn bereitgestellt werden kann und gleichzeitig die Blendung anderer Verkehrsteilnehmer wirkungsvoll verhindert wird.

Diese Aufgabe wird erfindungsgemäß durch ein Verfahren mit den Merkmalen des Anspruchs 1 und eine Scheinwerferanordnung mit den Merkmalen des Anspruchs 7 gelöst. Vorteilhafte Aus- und Weiterbildungen ergeben sich aus den Unteransprüchen.

Bei dem erfindungsgemäßen Verfahren werden für eine Fernlichtfunktion die optischen Achsen der Scheinwerfereinheiten relativ zu einer parallelen Ausrichtung horizontal aufeinander zu geschwenkt. Die optischen Achsen der Scheinwerfereinheiten schneiden sich somit in einem gewissen Abstand vor dem Fahrzeug. Sie divergieren nicht wie bei dem Schwenkwinkel für die Abblendlichtfunktion.

Unter einer Abblendlichtfunktion wird im Sinne der Erfindung eine Lichtverteilung verstanden, mit der verhindert wird, dass andere Verkehrsteilnehmer geblendet werden. Dabei wird unter der Abblendfunktion nicht nur das herkömmliche Abblendlicht verstanden, sondern auch ein herkömmliches Fernlicht, dessen Lichtverteilung so verändert wurde, dass die Blendung anderer Verkehrsteilnehmer verhindert wird. Eine derartige Abblendlichtfunktion wird beispielsweise auch als adaptives Fernlicht oder maskiertes Fernlicht bezeichnet. Unter einer Fernlichtfunktion wird im Sinne der Erfindung eine Lichtverteilung verstanden, welche auf eine maximale Ausleuchtung der Umgebung vor dem Fahrzeug ausgerichtet ist, ohne eine etwaige Blendung anderer Verkehrsteilnehmer zu berücksichtigen.

Die optischen Achsen der Scheinwerfereinheiten ergeben sich aus der Hauptemissionsrichtung der Scheinwerfereinheiten. Ferner können sie sich aus der Geometrie der Scheinwerfereinheit selbst ergeben. Wird von der Scheinwerfereinheit ein paralleles Lichtbündel emittiert, ist die optische Achse parallel zu diesem Lichtbündel und geht durch die Lichtquelle der Scheinwerfereinheit. Umfasst die Scheinwerfereinheit mehrere Lichtquellen, verläuft die optische Achse beispielsweise durch die Mitte der Scheinwerfeinheit und ist parallel zu dem Lichtbündel ausgerichtet, welches von der Scheinwerfereinheit emittiert wird. Des Weiteren kann die optische Achse die Richtung der maximalen Beleuchtungsstärke der Scheinwerfereinheit sein. Die maximale Leuchtstärke kann z. B. mittels eines Messschirms ermittelt werden, der z. B. in 10 m Entfernung vor der Scheinwerfereinheit senkrecht zur Lichtemission der Scheinwerfereinheit angeordnet ist.

Gemäß einer Ausgestaltung des erfindungsgemäßen Verfahrens wird ein Verkehrsteilnehmer in Richtung der Lichtemission der Scheinwerferanordnung erfasst und die von der Scheinwerferanordnung für die Abblendlichtfunktion erzeugte Lichtverteilung wird in Abhängigkeit von der Position des Verkehrsteilnehmers relativ zum Fahrzeug geregelt. Die von der Scheinwerferanordnung für die Abblendlichtfunktion erzeugte Lichtverteilung wird insbesondere so verändert, dass in Richtung des erfassten Verkehrsteilnehmers ein Mittelbereich mit geringerer Leuchtweite und beidseitig neben diesem Mittelbereich Seitenbereiche mit größerer Leuchtweite gebildet werden. Des Weiteren kann der relativ zu der Scheinwerferanordnung vertikale Winkel eines Verkehrsteilnehmers in Richtung der Lichtemission der Scheinwerferanordnung erfasst werden. In diesem Fall kann ferner für die Abblendlichtfunktion die Leuchtweite in Richtung des erfassten Verkehrsteilnehmers in Abhängigkeit von dem vertikalen Winkel des Verkehrsteilnehmers geregelt werden.

Gemäß einer Ausgestaltung des erfindungsgemäßen Verfahrens werden für die Fernlichtfunktion die optischen Achsen der Scheinwerfereinheiten relativ zu einer horizontalen Ausrichtung vertikal nach unten geschwenkt.

Für die Fernlichtfunktion können die optischen Achsen der Scheinwerfereinheiten insbesondere so geschwenkt werden, dass sie sich in einer definierten Entfernung vor dem Fahrzeug in der Mitte zwischen den Scheinwerfereinheiten schneiden. Dieser Schnittpunkt der optischen Achsen liegt beispielsweise in einem Bereich von 200 m bis 500 m vor dem Fahrzeug. Der Schnittpunkt liegt insbesondere auf der Fahrbahn bzw. auf einer Ebene, die von den Berührungspunkten der Reifen mit der Fahrbahn aufgespannt wird.

Durch das erfindungsgemäße Verfahren kann einerseits eine Abblendlichtfunktion bereitgestellt werden, mit der die Blendung anderer Verkehrsteilnehmer verhindert werden kann. Andererseits wird eine Fernlichtfunktion bereitgestellt, welche eine optimale Ausleuchtung des Verkehrsbereichs vor dem Fahrzeug bereitstellt. Dabei unterscheidet sich die Fernlichtfunktion des erfindungsgemäßen Verfahrens von einer herkömmlichen Fernlichtfunktion dadurch, dass die Scheinwerfereinheiten relativ zu einer parallelen Ausrichtung horizontal aufeinander zu geschwenkt werden und sich ein Schnittpunkt der optischen Achsen vor dem Fahrzeug in der Mitte zwischen den Scheinwerfereinheiten ergibt.

Die erfindungsgemäße Scheinwerferanordnung ist dadurch gekennzeichnet, dass mittels des Steuergeräts für eine Fernlichtfunktion die optischen Achsen der Scheinwerfereinheiten relativ zu einer parallelen Ausrichtung horizontal aufeinander zu schwenkbar sind.

Gemäß einer Weiterbildung der erfindungsgemäßen Scheinwerferanordnung ist diese mit einer Einrichtung zum Erfassen eines Verkehrsteilnehmers in Richtung der Lichtemission der Scheinwerferanordnung gekoppelt. Die Lichtverteilung ist in diesem Fall von dem Steuergerät in Abhängigkeit von der Position des anderen Verkehrsteilnehmers relativ zum Fahrzeug regelbar.

Des Weiteren umfasst die Scheinwerferanordnung insbesondere einen Speicher, in dem Parameter für die Schwenkwinkel der optischen Achsen der Scheinwerfereinheiten für die Fernlichtfunktion gespeichert sind. Die in dem Speicher gespeicherten Parameter werden beim Umschalten von der Abblendlichtfunktion auf die Fernlichtfunktion dazu verwendet, die horizontale und vertikale Ausrichtung der optischen Achsen von der Abblendlichtfunktion an die Fernlichtfunktion anzupassen. Auf diese Weise wird eine optimale Lichtverteilung bereitgestellt, die sich aus der Überlagerung der Lichtemission der rechten und linken Scheinwerfereinheit ergibt.

Für die Funktion zur Anpassung der optischen Achsen an die Fernlichtfunktion kann auch ein separates Steuergerät vorgesehen sein. Ferner kann diese Anpassung mittels eines Softwaremoduls in dem Steuergerät oder den Steuergeräten für die Schweinwerfereinheit(en) integriert werden.

Die Erfindung wird nun anhand eines Ausführungsbeispiels mit Bezug zu den Zeichnungen erläutert.
- Figur 1: zeigt schematisch ein Ausführungsbeispiel einer Scheinwerfereinheit der erfindungsgemäßen Scheinwerferanordnung,
- Figur 2: zeigt schematisch ein Ausführungsbeispiel der erfindungsgemäßen Scheinwerferanordnung,
- Figur 3: zeigt ein Isolux-Diagramm der Gesamthelligkeitsverteilung für die Abblendlichtfunktion auf einer senkrechten Wand beim Erfassen eines vorausfahrenden Fahrzeugs,
- Figur 4: zeigt die Ausrichtung der optischen Achsen der Scheinwerfereinheiten für eine Abblendlichtfunktion, wenn ein vorausfahrendes Fahrzeug detektiert wurde und
- Figur 5: zeigt die Ausrichtung der optischen Achsen der Scheinwerfereinheiten für eine Fernlichtfunktion.

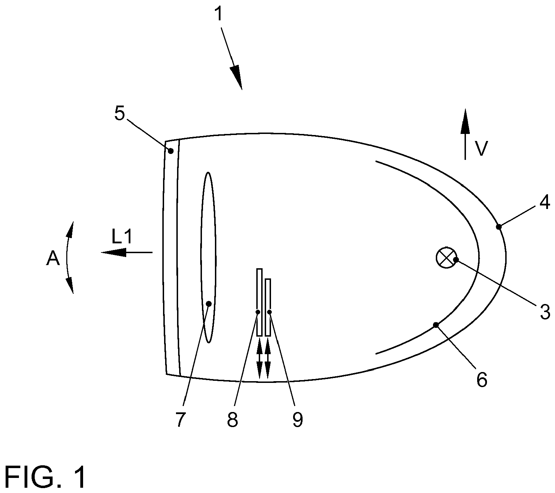

Die Scheinwerferanordnung umfasst zwei beabstandete Projektionsscheinwerfer 1 und 2, die vorne auf der rechten und linken Seite des Fahrzeugs auf an sich bekannte Weise angeordnet sind und die jeweils eine Scheinwerfereinheit bilden können. Alternativ kann eine Scheinwerfereinheit mehrere Scheinwerfer umfassen. Einer der Projektionsscheinwerfer 1 ist in Figur 1 gezeigt. Der auf der anderen Seite angeordnete Projektionsscheinwerfer 2 ist im Wesentlichen identisch aufgebaut.

In Figur 1 ist ein Schnitt in einer Ebene dargestellt, die parallel zu der von der Fahrzeuglängsachse und der Vertikalen V aufgespannten Ebene ist. Der Projektionsscheinwerfer 1 umfasst auf an sich bekannte Art und Weise eine Lichtquelle 3, die von einem als Rotationsellipsoid ausgebildeten Reflektor 6 umgeben ist. Der Reflektor 6 weist somit zwei Brennpunkte auf. Die Lichtquelle 3 befindet sich in einem der Brennpunkte des Reflektors 6. Das von der Lichtquelle 3 emittierte Licht wird von dem Reflektor 6 in Lichtemissionsrichtung L1 des Projektionsscheinwerfers 1 in Richtung einer Projektionslinse 7 reflektiert. Die Lichtemissionsrichtung L1 stellt auch die optische Achse des Projektionsscheinwerfers dar. Eine Blendenanordnung mit den flächigen Blenden 8 und 9 ist an der Brennposition der Projektionslinse 7 und nahe dem zweiten Brennpunkt des Reflektors 6 angeordnet. Die Normalen der flächigen Blenden 8 und 9 sind im Wesentlichen parallel zur Lichtemissionsrichtung L1 ausgerichtet. Die Lichtquelle 3, der Reflektor 6, die Linse 7 und die Blenden 8, 9 sind innerhalb eines Gehäuses 4 angeordnet, das von einer Lichtscheibe 5 abgeschlossen ist.

Der Projektionsscheinwerfer 1 lässt sich auf an sich bekannte Weise zur Einstellung der Leuchtweite in Richtung des Pfeils A auf und ab kippen, d. h. er ist vertikal schwenkbar. Die Lichtemissionsrichtung L1 des Projektionsscheinwerfers 1 ist außerdem horizontal, d. h. um eine vertikale Achse schwenkbar. Ferner lässt sich die Leuchtweite und insbesondere die Form der Hell-Dunkel-Grenze der Gesamtlichtverteilung des Projektionsscheinwerfers 1 dadurch verändern, dass die Blenden 8 und 9 in vertikaler Richtung bewegt werden. Zur Lageveränderung der Blenden 8 und 9 ist eine Steuervorrichtung vorgesehen.

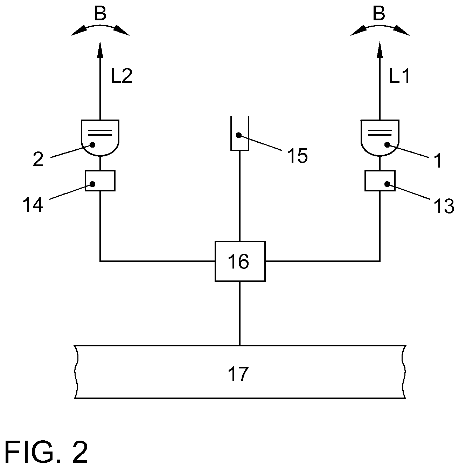

Im Folgenden wird mit Bezug zu Figur 2 erläutert, wie der rechte und der linke Scheinwerfer 1 und 2 der Scheinwerfereinheiten der Scheinwerferanordnung angesteuert werden:
Der rechte Scheinwerfer 1 ist mit einem Steuergerät 13, der linke Scheinwerfer 2 mit einem Steuergerät 14 verbunden. Diese Steuergeräte 13, 14 steuern zum einen den Schwenkwinkel, insbesondere den Schwenkwinkel um eine vertikale und eine horizontale Achse, der von den Scheinwerfern 1 und 2 emittierten Lichtstrahlen in den Richtungen L1 und L2. L1 und L2 bezeichnen dabei auch die optischen Achsen der rechten und linken Scheinwerfereinheit. Ferner steuern die Steuergeräte 13 und 14 die vertikale Lage der Blenden 8 und 9 der Blendenanordnungen für den rechten und linken Scheinwerfer 1,2.

Des Weiteren ist eine Einrichtung 15 zum Erfassen eines Verkehrsteilnehmers in Richtung der Lichtemission der Scheinwerfer 1, 2 vorgesehen. Bei dieser Erfassungseinrichtung 15 kann es sich um eine Kamera mit angeschlossener Bildverarbeitungseinheit handeln, die die Lichter vorausfahrender und entgegenkommender Fahrzeuge erfasst. Mittels der Bildverarbeitungseinrichtung kann die Richtung dieser Lichter sowohl in einer horizontalen als auch in einer vertikalen Richtung erfasst werden. Die Bildverarbeitungseinheit analysiert die von der nach vorne gerichteten Kamera aufgenommene Szene. In dieser Szene wird die Lage der Lichter von vorausfahrenden und entgegenkommenden Fahrzeugen detektiert. Anhand des horizontalen Abstands zweier Scheinwerfer bzw. Rücklichter eines anderen Fahrzeugs kann die Bildverarbeitung zusätzlich auf die Breite des Fahrzeugs schließen. Schließlich können Lichtquellen erkannt werden, welche auf eine Straßenbeleuchtung bzw. eine Ortschaft schließen lassen. Eine Straßenbeleuchtung lässt sich in der Regel von Fahrzeuglichtern über die Position im Kamerabild oder über die mit dem Netz frequenzmodulierte Intensität unterscheiden. Der Öffnungswinkel der Kamera entspricht vorzugsweise dem Öffnungswinkel der Scheinwerferanordnung.

Die Richtung in der horizontalen und vertikalen Ebene wird von der Erfassungseinrichtung 15 an ein Steuergerät 16 übertragen, welches des Weiteren mit den Steuergeräten 13 und 14 verbunden ist.

Gemäß einer anderen Ausgestaltung des Systems ist die Erfassungseinrichtung 15 als Laser- oder Radarsensor ausgebildet, mit welchem die Entfernung von Objekten in Richtung der Lichtemissionsrichtung gemessen werden kann. Hierbei können insbesondere auch unbeleuchtete oder unzureichend beleuchtete Verkehrsteilnehmer, wie beispielsweise Fußgänger und ggf. auch Radfahrer erfasst werden. Außerdem können über die Entfernungsmessung gezielt Verkehrsteilnehmer erfasst werden, die sich innerhalb der Blendungsgrenzen des Fernlichts befinden. Schließlich kann über die Messung von Entfernung, Geschwindigkeit und Bewegungsrichtung der Verkehrsteilnehmer eine gute Klassifikation von Fahrzeugen bzw. Verkehrsteilnehmern erfolgen, wodurch Fehlsteuerungen der Scheinwerferanordnung vermieden werden. Aus dem Abstand des Objekts lässt sich der vertikale Winkel berechnen, der als Steuergröße für die Scheinwerferanordnung verwendet wird.

Mit der Entfernungsmessung durch den Laser- oder Radarsensor ist es außerdem möglich, ein fahrendes Fahrzeug mittels der Geschwindigkeitserfassung von stehenden Objekten zu unterscheiden. Darüber hinaus kann mit einem scannenden Laserentfernungsmesser die Breite der erfassten Objekte vermessen werden, so dass mit höherer Sicherheit die Art von Objekten, d. h. ob es sich um einen Verkehrsteilnehmer, ein Kraftfahrzeug oder Radfahrer oder um einen Leitpfosten handelt, rückgeschlossen werden.

Der Laser- oder Radarsensor kann auch mit einer Kamera kombiniert werden, um die Erkennungssicherheit insbesondere hinsichtlich der Erfassung der Vertikalposition des Verkehrsteilnehmers zu erhöhen. Da Kameras, Laser- oder Radarsensoren in zunehmendem Maße Verwendung in Fahrzeugen mit Fahrassistenzsystemen finden, kann diese Sensorik für die Steuerung der Scheinwerferanordnung mitverwendet werden, ohne dass zusätzliche Kosten entstehen.

Das Steuergerät 16 ist ferner mit einem Fahrzeugbus 17 verbunden, über welchen weitere im Fahrzeug erfasste Daten an das Steuergerät 16 übertragen werden können. Beispielsweise kann auf diese Weise der Lenkwinkeleinschlag oder Daten, aus denen sich der gerade gefahrene Kurvenradius bestimmen lässt, an das Steuergerät 16 übertragen werden.

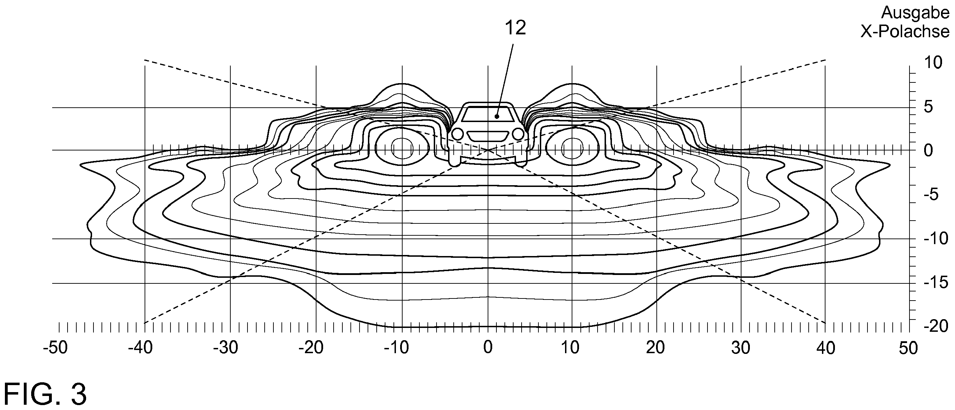

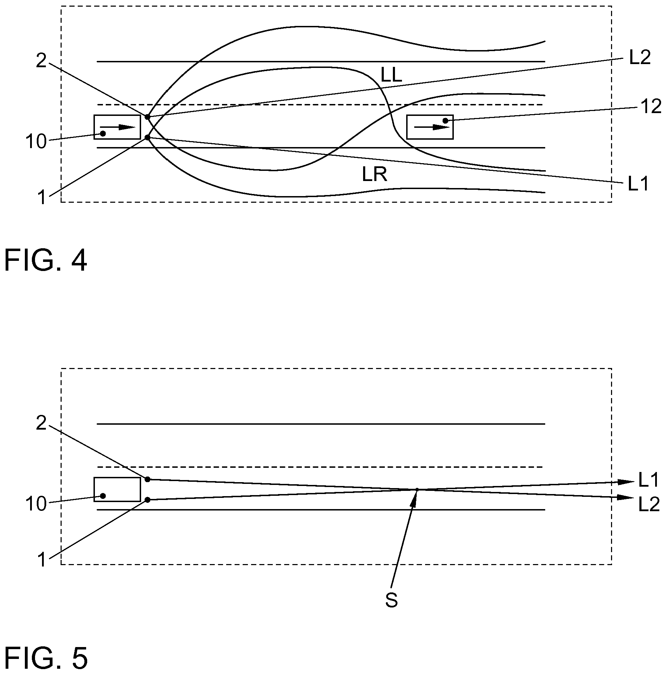

Im Folgenden wird nun mit Bezug zu den Figuren 3 und 4 erläutert, wie die Scheinwerfer 1 und 2 in Abhängigkeit von den Daten der Erfassungseinheit 15 und/oder weiteren im Fahrzeug erfassten Daten für die Abblendlichtfunktion angesteuert werden:
Werden in der Mitte vor dem eigenen Fahrzeug 10 andere Verkehrsteilnehmer, wie z. B. ein vorausfahrendes Fahrzeug 12, detektiert, werden die optischen Achsen L1 und L2 der beiden Scheinwerfer 1 und 2 auseinandergeschwenkt und die beiden Blenden 8 und 9 sowohl der Blendenanordnung des rechten Scheinwerfers als auch der Blendenanordnung des linken Scheinwerfers 2 werden in eine Stellung gefahren, bei der in der Gesamtlichtverteilung ein Mittelbereich mit geringerer Leuchtweite entsteht, in welchem sich der andere Verkehrsteilnehmer befindet, ohne geblendet zu werden.

In Figur 3 ist ein Isolux-Diagramm mit einer Helligkeitsverteilung auf einer senkrechten Wand gezeigt, wie sie gemäß der Erfindung für eine Abblendlichtfunktion angesteuert wird, wenn z. B. ein vorausfahrendes Fahrzeug 12 detektiert wird. In diesem Fall befinden sich die Blenden 8 und 9 der Blendenanordnungen für den rechten und den linken Scheinwerfer 1 und 2 in einer Stellung, bei der sich ein Mittelbereich mit geringerer Leuchtweite ergibt. Ferner sind die optischen Achsen L1 und L2 der beiden Scheinwerfer 1 und 2 so weit auseinandergeschwenkt, dass die Breite des Mittelbereichs der Breite des Fahrzeugs 12 entspricht. Es wird somit in der Mitte der Gesamtlichtverteilung ein Bereich für einen anderen Verkehrsteilnehmer ausgespart, so dass dieser nicht geblendet wird.

In Figur 4 ist die entsprechende Gesamtlichtverteilung in einer Ansicht von oben gezeigt. Die Ausleuchtung LR des rechten Scheinwerfers 1 ist im Bereich der Fahrbahn des Fahrzeugs 10 sowie im Bereich der Gegenfahrbahn so begrenzt, dass die Hell-Dunkel-Grenze so weit wie möglich an das vorausfahrende Fahrzeug 12 heranreicht, eine Blendung des Fahrers des vorausfahrenden Fahrzeugs 12 jedoch vermieden wird. Im Bereich rechts neben dem vorausfahrenden Fahrzeug 12 wird von dem rechten Scheinwerfer 1 eine Fernlichtausleuchtung bereitgestellt, ohne hierdurch den Fahrer des vorausfahrenden Fahrzeugs 12 zu blenden. Vom linken Scheinwerfer 2 wird die Ausleuchtung LL bereitgestellt. Auch sie ist im Bereich der Fahrbahn des Fahrzeugs 10 so begrenzt, dass die Hell-Dunkel-Grenze so weit wie möglich an das vorausfahrende Fahrzeug 12 heranreicht, eine Blendung des Fahrers des vorausfahrenden Fahrzeugs 12 jedoch vermieden wird. Im Bereich der Gegenfahrbahn wird von dem linken Scheinwerfer 2 eine Ausleuchtung mit großer Reichweite bereitgestellt, so dass der Fahrer des Fahrzeugs 10 die Gegenfahrbahn gut überblicken kann.

Die sich aus den Ausleuchtungen LR und LL ergebende Gesamtlichtverteilung wird kontinuierlich an den horizontalen und vertikalen Winkel des Fahrzeugs 10 zum vorausfahrenden Fahrzeug 12 angepasst, so dass die Leuchtweite im Mittelbereich so weit wie möglich an das vorausfahrende Fahrzeug heranreicht.

Mit Bezug zu Figur 5 wird im Folgenden die Veränderung der Ausrichtung der optischen Achsen L1 und L2 bei einem Wechsel von der Abblendlichtfunktion zu der Fernlichtfunktion beschrieben:
Wie oben erläutert, sind die optischen Achsen L1 und L2 bei der Abblendlichtfunktion in horizontaler Richtung auseinandergeschwenkt. Ferner ist die für die Abblendlichtfunktion bereitgestellte Gesamtlichtverteilung durch die Blenden 8 und 9 maskiert. Beim Wechsel in die Fernlichtfunktion, die entweder manuell oder automatisch in Abhängigkeit von der Erfassungseinrichtung 15 von den Steuereinrichtungen 13 und 14 angesteuert werden kann, werden die Blenden 8 und 9 aus der Lichtemission der Scheinwerfer 1 und 2 herausgefahren, so dass die Gesamtlichtverteilung von den Blenden 8 und 9 nicht mehr beeinflusst ist. Es hat sich herausgestellt, dass die sich in diesem Fall ergebene Gesamtlichtverteilung zwar einer Fernlichtfunktion entspricht, diese Gesamtlichtverteilung für den Fahrer hinsichtlich der Ausleuchtung der Fahrbahn jedoch unzureichend ist. Aus diesem Grund werden für die Fernlichtfunktion der erfindungsgemäßen Scheinwerferanordnung die optischen Achsen L1 und L2 der Scheinwerfer 1 und 2 relativ zu einer parallelen Ausrichtung horizontal aufeinander zu geschwenkt, wie dies in Figur 5 gezeigt ist. Hierfür umfassen die Steuergeräte 13 und 14 jeweils einen Speicher, in dem Parameter für die Schwenkwinkel der optischen Achsen L1 und L2 der Scheinwerfer 1 und 2 für die Fernlichtfunktion gespeichert sind.

Bevorzugt werden die optischen Achsen L1 und L2 nicht nur horizontal aufeinander zu geschwenkt, sondern ferner auch vertikal nach unten geschwenkt. Die in den Steuergeräten 13 und 14 gespeicherten Parameter führen dabei zu einer Schwenkung der optischen Achsen L1 und L2 für die Fernlichtfunktion, bei der sich die optischen Achsen L1 und L2 in einer definierten Entfernung vor dem Fahrzeug 10 in der Mitte zwischen den Scheinwerfern 1 und 2 schneiden. Dieser Schnittpunkt ist in der Figur 5 mit S bezeichnet. Der Schnittpunkt S liegt beispielsweise in einem Bereich von 200 m bis 500 m, insbesondere 250 m vor dem Fahrzeug auf der Fahrbahn, insbesondere wenn die Fahrbahn eben ist.

Betrachtet man eine Isolux-Darstellung, die in Figur 3 für die Abblendlichtfunktion gezeigt ist, für die Fernlichtfunktion, ergibt sich, dass, relativ zur Abblendlichtfunktion, die optischen Achsen L1 und L2 für die Fernlichtfunktion so korrigiert werden, dass sich die optischen Achsen, die durch den Mittelpunkt der jeweiligen Lichtquelle der Scheinwerfer 1 und 2 und durch den maximalen Wert der Beleuchtungsstärke auf dem Messschirm in 10 m Entfernung verlaufen, in einer als Parameter in den Steuergeräten 13 und 14 gespeicherten Entfernung vordem Fahrzeug 10 schneiden.

### BEZUGSZEICHENLISTE

- 1: rechter Scheinwerfer
- 2: linker Scheinwerfer
- 3: Lichtquelle
- 4: Gehäuse
- 5: Lichtscheibe
- 6: Reflektor
- 7: Projektionslinse
- 8: erste Blende
- 9: zweite Blende
- 10: Fahrzeug mit der Scheinwerferanordnung
- 12: vorausfahrendes Fahrzeug
- 13: Steuergerät für den rechten Scheinwerfer
- 14: Steuergerät für den linken Scheinwerfer
- 15: Einrichtung zum Erfassen anderer Verkehrsteilnehmer
- 16: Steuergerät
- 17: Fahrzeugbus
- L1 und L2: optische Achsen
- S: Schnittpunkt der optischen Achsen für die Fernlichtfunktion

## Patentansprüche

1. Verfahren zum Steuern einer Scheinwerferanordnung für ein Fahrzeug (10) mit einer rechten und einer linken Scheinwerfereinheit (1, 2), bei dem für ein adaptives Fernlicht oder maskiertes Fernlicht die optischen Achsen (L1, L2) der Scheinwerfereinheiten (1, 2) relativ zu einer parallelen Ausrichtung horizontal auseinandergeschwenkt werden,
**dadurch gekennzeichnet,**
**dass** für eine Fernlichtfunktion die optischen Achsen (L1, L2) der Scheinwerfereinheiten (1, 2) relativ zu einer parallelen Ausrichtung horizontal aufeinander zu geschwenkt werden und
**dass** der relativ zu der Scheinwerferanordnung vertikale Winkel eines Verkehrsteilnehmers (12) in Richtung der Lichtemission der Scheinwerferanordnung erfasst wird und dass für das adaptive Fernlicht oder maskierte Fernlicht die Leuchtweite in Richtung des erfassten Verkehrsteilnehmers (12) in Abhängigkeit von dem vertikalen Winkel des Verkehrsteilnehmers (12) geregelt wird.

2. Verfahren nach Anspruch 1,
**dadurch gekennzeichnet,**
**dass** ein Verkehrsteilnehmer (12) in Richtung der Lichtemission der Scheinwerferanordnung erfasst wird und die von der Scheinwerferanordnung für das adaptive Fernlicht oder maskierte Fernlicht erzeugte Lichtverteilung in Abhängigkeit von der Position des Verkehrsteilnehmers (12) relativ zum Fahrzeug (10) geregelt wird.

3. Verfahren nach Anspruch 2,
**dadurch gekennzeichnet,**
**dass** die von der Scheinwerferanordnung für das adaptive Fernlicht oder maskierte Fernlicht erzeugte Lichtverteilung so verändert wird, dass in Richtung des erfassten Verkehrsteilnehmers (12) ein Mittelbereich mit geringerer Leuchtweite und beidseitig neben diesem Mittelbereich Seitenbereiche mit größerer Leuchtweite gebildet werden.

4. Verfahren nach einem der vorhergehenden Ansprüche ,
**dadurch gekennzeichnet,**
**dass** für die Fernlichtfunktion die optischen Achsen (L1, L2) der Scheinwerfereinheiten (1, 2) relativ zu einer horizontalen Ausrichtung vertikal nach unten geschwenkt werden.

5. Verfahren nach einem der vorhergehenden Ansprüche,
**dadurch gekennzeichnet,**
**dass** für die Fernlichtfunktion die optischen Achsen (L1, L2) der Scheinwerfereinheiten (1, 2) so geschwenkt werden, dass sie sich in einer definierten Entfernung vor dem Fahrzeug (10) in der Mitte zwischen den Scheinwerfereinheiten (1, 2) schneiden.

6. Verfahren nach Anspruch 5,
**dadurch gekennzeichnet,**
**dass** der Schnittpunkt (S) der optischen Achsen (L1, L2) in einem Bereich von 200 m bis 500 m vor dem Fahrzeug (10) liegt.

7. Scheinwerferanordnung für ein Fahrzeug (10) mit einer rechten und einer linken Scheinwerfereinheit (1, 2) und zumindest einem Steuergerät (13, 14), wobei mit dem Steuergerät (13, 14) für ein adaptives Fernlicht oder maskiertes Fernlicht die optischen Achsen (L1, L2) der Scheinwerfereinheiten (1, 2) relativ zu einer parallelen Ausrichtung horizontal auseinanderschwenkbar sind,
**dadurch gekennzeichnet,**
**dass** mittels des Steuergeräts (13, 14) für eine Fernlichtfunktion die optischen Achsen (L1, L2) der Scheinwerfereinheiten (1, 2) relativ zu einer parallelen Ausrichtung horizontal aufeinander zu schwenkbar sind und
**dass** die Scheinwerferanordnung mit einer Einrichtung zum Erfassen des vertikalen Winkels eines Verkehrsteilnehmers (12) in Richtung der Lichtemission der Scheinwerferanordnung gekoppelt ist und die Leuchtweite des adaptiven Fernlichts oder maskierten Fernlichts in Richtung des erfassten Verkehrsteilnehmers (12) von dem Steuergerät (13, 14) in Abhängigkeit von dem vertikalen Winkel des Verkehrsteilnehmers (12) regelbar ist.

8. Scheinwerferanordnung nach Anspruch 7,
**dadurch gekennzeichnet,**
**dass** die Scheinwerferanordnung mit einer Einrichtung zum Erfassen eines Verkehrsteilnehmers (12) in Richtung der Lichtemission der Scheinwerferanordnung gekoppelt ist und Lichtverteilung von dem Steuergerät (13, 14) in Abhängigkeit von der Position des anderen Verkehrsteilnehmers (12) relativ zum Fahrzeug (10) regelbar ist.

9. Scheinwerferanordnung nach Anspruch 7 oder 8,
**dadurch gekennzeichnet,**
**dass** die Scheinwerferanordnung einen Speicher umfasst, in dem Parameter für die Schenkwinkel der optischen Achsen (L1, L2) der Scheinwerfereinheiten (1, 2) für die Fernlichtfunktion gespeichert sind.

## Claims

1. Method for controlling a headlight arrangement for a vehicle (10) comprising a right and a left headlight unit (1, 2), wherein for an adaptive main beam or masked main beam the optical axes (L1, L2) of the headlight units (1, 2) are pivoted apart horizontally relative to a parallel alignment,
**characterized**
**in that** for a main beam function the optical axes (L1, L2) of the headlight units (1, 2) are pivoted towards one another horizontally relative to a parallel alignment, and
**in that** the vertical angle of a road user (12) relative to the headlight arrangement is detected in the direction of the light emission of the headlight arrangement, and in that for the adaptive main beam or masked main beam the luminous distance in the direction of the detected road user (12) is regulated depending on the vertical angle of the road user (12).

2. Method according to Claim 1,
**characterized**
**in that** a road user (12) is detected in the direction of the light emission of the headlight arrangement and the light distribution generated by the headlight arrangement for the adaptive main beam or masked main beam is regulated depending on the position of the road user (12) relative to the vehicle (10).

3. Method according to Claim 2,
**characterized**
**in that** the light distribution generated by the headlight arrangement for the adaptive main beam or masked main beam is varied such that a central region with a smaller luminous distance and on both sides alongside said central region side regions with a greater luminous distance are formed in the direction of the detected road user (12).

4. Method according to any of the preceding claims, **characterized**
**in that** for the main beam function the optical axes (L1, L2) of the headlight units (1, 2) are pivoted downwards vertically relative to a horizontal alignment.

5. Method according to any of the preceding claims, **characterized**
**in that** for the main beam function the optical axes (L1, L2) of the headlight units (1, 2) are pivoted such that they intersect at a defined distance in front of the vehicle (10) in the centre between the headlight units (1, 2).

6. Method according to Claim 5,
**characterized**
**in that** the intersection point (S) of the optical axes (L1, L2) is in a range of 200 m to 500 m in front of the vehicle (10).

7. Headlight arrangement for a vehicle (10) comprising a right and a left headlight unit (1, 2) and at least one control unit (13, 14), wherein, by means of the control unit (13, 14), for an adaptive main beam or masked main beam the optical axes (L1, L2) of the headlight units (1, 2) are able to be pivoted apart horizontally relative to a parallel alignment,
**characterized**
**in that**, by means of the control unit (13, 14), for a main beam function the optical axes (L1, L2) of the headlight units (1, 2) are able to be pivoted towards one another horizontally relative to a parallel alignment, and
**in that** the headlight arrangement is coupled to a device for detecting the vertical angle of a road user (12) in the direction of the light emission of the headlight arrangement and the luminous distance of the adaptive main beam or masked main beam in the direction of the detected road user (12) is able to be regulated by the control unit (13, 14) depending on the vertical angle of the road user (12).

8. Headlight arrangement according to Claim 7, **characterized**
**in that** the headlight arrangement is coupled to a device for detecting a road user (12) in the direction of the light emission of the headlight arrangement and the light distribution is able to be regulated by the control unit (13, 14) depending on the position of the other road user (12) relative to the vehicle (10).

9. Headlight arrangement according to Claim 7 or 8, **characterized**
**in that** the headlight arrangement comprises a memory in which parameters for the pivoting angles of the optical axes (L1, L2) of the headlight units (1, 2) for the main beam function are stored.

## Revendications

1. Procédé de commande d'un dispositif de phare pour un véhicule automobile (10) comportant une unité de phare droite et gauche (1, 2), dans lequel pour un feu de route adaptatif ou un feu de route masqué, les axes optiques (L1, L2) des unités de phares (1, 2) sont séparés l'un de l'autre par pivotement horizontalement par rapport à une orientation parallèle,
**caractérisé en ce que**
pour une fonction de feu de route les axes optiques (L1, L2) des unités de phare (1, 2) sont pivotés l'un vers l'autre horizontalement par rapport à une orientation parallèle et
**en ce que** l'angle vertical d'un participant à la circulation (12) par rapport au dispositif de phare dans la direction d'émission de lumière du dispositif de phare est détecté et **en ce que** pour le feu de route adaptatif ou le feu de route masqué, la portée d'éclairage dans la direction du participant à la circulation (12) détecté est régulée en fonction de l'angle vertical du participant à la circulation (12).

2. Procédé selon la revendication 1,
**caractérisé en ce que**
un participant à la circulation (12) est détecté dans la direction d'émission de lumière du dispositif de phare et la distribution de lumière produite par le dispositif de phare pour le feu de route adaptatif ou le feu de route masqué est régulée en fonction de la position du participant à la circulation (12) par rapport au véhicule (10).

3. Procédé selon la revendication 2,
**caractérisé en ce que**
la distribution de lumière produite par le dispositif de phare pour le feu de route adaptatif ou le feu de route masqué est variée de sorte que dans la direction du participant à la circulation (12) détecté, une zone centrale avec une portée d'éclairage moindre et des zones latérales des deux côtés de cette zone centrale avec une plus grande portée d'éclairage soient formées.

4. Procédé selon une des revendications précédentes, **caractérisé en ce que**
pour la fonction de feu de route les axes optiques (L1, L2) des unités de phare (1, 2) sont basculés vers le bas verticalement par rapport à une orientation horizontale.

5. Procédé selon une des revendications précédentes, **caractérisé en ce que**
pour la fonction de feu de route les axes optiques (L1, L2) des unités de phare (1, 2) sont basculés de telle sorte qu'ils se coupent à une distance définie devant le véhicule (10) au centre entre les unités de phare (1, 2).

6. Procédé selon la revendication 5,
**caractérisé en ce que**
le point d'intersection (S) des axes optiques (L1, L2) est situé dans une zone de 200 m à 500 m devant le véhicule (10).

7. Dispositif de phare pour un véhicule automobile (10) comportant une unité de phare droite et gauche (1, 2) et au moins un appareil de commande (13, 14), dans lequel avec l'appareil de commande (13, 14) pour un feu de route adaptatif ou un feu de route masqué, les axes optiques (L1, L2) des unités de phares (1, 2) peuvent être séparés l'un de l'autre par pivotement horizontalement par rapport à une orientation parallèle,
**caractérisé en ce que**
au moyen de l'appareil de commande (13, 14) pour une fonction de feu de route les axes optiques (L1, L2) des unités de phare (1, 2) peuvent être pivotés l'un vers l'autre horizontalement par rapport à une orientation parallèle et
**en ce que** le dispositif de phare est couplé avec un dispositif pour détecter l'angle vertical d'un participant à la circulation (12) dans la direction d'émission de lumière du dispositif de phare et la portée d'éclairage du feu de route adaptatif ou du feu de route masqué dans la direction du participant à la circulation (12) détecté peut être régulée par l'appareil de commande (13, 14) en fonction de l'angle vertical du participant à la circulation (12).

8. Dispositif de phare selon la revendication 7,
**caractérisé en ce que**
le dispositif de phare est couplé avec un dispositif de détection d'un participant à la circulation (12) dans la direction d'émission de lumière du dispositif de phare et la distribution de lumière peut être régulée par l'appareil de commande (13, 14) en fonction de la position de l'autre participant à la circulation (12) par rapport au véhicule (10).

9. Dispositif de phare selon la revendication 7 ou 8, **caractérisé en ce que**
le dispositif de phare comprend une mémoire, dans laquelle des paramètres de l'angle de pivotement des axes optiques (L1, L2) des unités de phare (1, 2) pour la fonction de feu de route sont mémorisés.
